(19) Europäisches Patentamt / European Patent Office / Office européen des brevets

(11) **EP 3 783 324 A1**

(12) **EUROPEAN PATENT APPLICATION**
published in accordance with Art. 153(4) EPC

(43) Date of publication:
**24.02.2021 Bulletin 2021/08**

(51) Int Cl.:
**G01K 7/14** *(2006.01)*

(21) Application number: **19788221.0**

(22) Date of filing: **18.04.2019**

(86) International application number:
**PCT/JP2019/016707**

(87) International publication number:
**WO 2019/203327 (24.10.2019 Gazette 2019/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.04.2018 JP 2018080893**

(71) Applicant: **Geomatec Co., Ltd.**
**Kanagawa 220-8109 (JP)**

(72) Inventors:
• **YAMAZAKI, Yoshiharu**
**Tokyo 146-0093 (JP)**
• **MIYATAKE, Shohei**
**Tokyo 146-0093 (JP)**

(74) Representative: **Grünecker Patent- und Rechtsanwälte**
**PartG mbB**
**Leopoldstraße 4**
**80802 München (DE)**

(54) **TEMPERATURE CALIBRATION DEVICE AND TEMPERATURE MEASUREMENT DEVICE**

(57) Provided are a temperature calibration device converting a thermoelectromotive force such that a thin-film thermocouple element can be connected to a temperature display device for a multi-purpose bulk thermocouple element and a temperature measurement device. The problem addressed by the present invention is solved by a temperature calibration device connected to a thin-film thermocouple element provided with at least one pair of thin films made of dissimilar metals, connected to each other at a temperature measurement contact on one end side, and having a pair of external contacts at the other end. The temperature calibration device includes at least one pair of input terminals made of an electroconductive material and connectable to the pair of external contacts, at least one pair of output terminals made of an electroconductive material and connectable to a pair of conducting wires linked to a temperature display device calculating a temperature by using an input voltage and displaying the calculated temperature, computation means for calibrating a detected value of a voltage between the input terminals and computing a calibrated voltage, and voltage application means for outputting the calibrated voltage between the output terminals. The calibrated voltage is output to the temperature display device when the input terminals are connected to the external contacts of the thin-film thermocouple element and the output terminals are connected to the temperature display device.

FIG. 1

**Description**

TECHNICAL FIELD

The present invention relates to a temperature calibration device and a temperature measurement device.

BACKGROUND ART

An element made of a combination of two types of metals for temperature measurement is called a thermocouple, which is a technique that has been used for a long time as a temperature measurement element using the Seebeck effect.

A multi-purpose bulk thermocouple element 20' that has been used in the related art is a thermocouple using a metal wire having a wire diameter of approximately 0.50 to 3.20 mm. Examples thereof include a K thermocouple that complies with Japanese Industrial Standard (JIS) C 1602-1995.

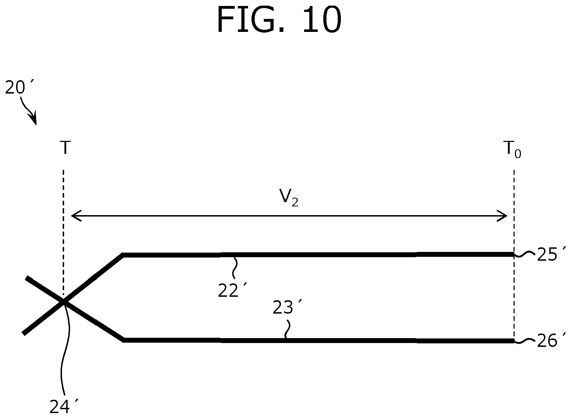

As illustrated in FIG. 10, the bulk thermocouple element 20' has a metal wire 22' and a metal wire 23', a temperature measurement contact 24' for object temperature measurement is provided at one end of the bulk thermocouple element 20', and external contacts 25' and 26', which are open ends, are provided at the other end of the bulk thermocouple element 20'.

The metal wires 22' and 23' are dissimilar materials and joined at the temperature measurement contact 24'.

Meanwhile, in a thin-film thermocouple element, a thin film of a thermocouple material is formed on a substrate such as a polymer film. The thin-film thermocouple element is used as a temperature sensor for measuring the temperature of a minute and narrow region.

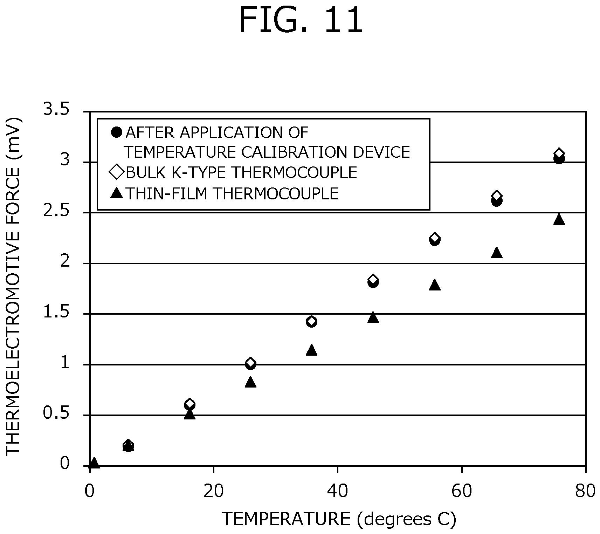

The thin-film thermocouple element is advantageous in that the element is thinner and more flexible than the bulk thermocouple element. However, as FIG. 11 illustrates temperature-thermoelectromotive force characteristics, the thermoelectromotive force that is generated in the thin-film thermocouple element is approximately tens of percent lower than the thermoelectromotive force that is generated in a general bulk thermocouple element.

It is difficult to match the temperature-thermoelectromotive force characteristics of the thin-film thermocouple element with the temperature-thermoelectromotive force characteristics of the bulk thermocouple element. In addition, although it is possible to make the temperature-thermoelectromotive force characteristics of the thin-film thermocouple element as close as possible to the temperature-thermoelectromotive force characteristics of the bulk thermocouple element, this is not realistic in view of productivity.

Further, the thin-film thermocouple element shows a value lower than the thermoelectromotive force that is derived from an actual temperature difference due to, for example, the difference between a thin metal wire and a thin film at the contact between the thin-film thermocouple element and a lead wire (thermocouple wire).

Accordingly, the temperature-thermoelectromotive force characteristics of the thin-film thermocouple element do not match the temperature-thermoelectromotive force characteristics of the bulk thermocouple element complying with the JIS and accurate temperature measurement becomes difficult.

Described in Patent Literature 1 is a technique for calculating an accurate temperature by two-point measurement and appropriate correction processing as a technique for performing temperature measurement with accuracy by using a thin-film thermocouple.

The temperature measurement element of Patent Literature 1 includes a first thermocouple as a thin-film thermocouple element and a pair of metal wires for signal extraction connected to external contacts of the first thermocouple. A second thermocouple, which is a pair of external metal wires made of the same constituent material as the first thermocouple and having the same length, is provided in the vicinity of the connection part between the first thermocouple and the pair of metal wires. Further, output voltage measurement is performed at two points, one being the temperature measurement contact of the first thermocouple as a thin-film thermocouple element and the other being the contact of the second thermocouple.

By computation being performed with a predetermined calculation formula, using the temperature of a measurement device based on zero compensation, the measured output of the temperature measurement contact of the first thermocouple, and the measured output of the contact of the second thermocouple, correction processing for reducing a temperature measurement error attributable to connection of the thin-film thermocouple element to a bulk material is performed and the accurate temperature of the temperature measurement contact of the thin-film thermocouple is calculated.

CITATION LIST

PATENT LITERATURE

PATENT LITERATURE 1: JP 2010-190735 A

SUMMARY OF INVENTION

TECHNICAL PROBLEM

The technique described in Patent Literature 1 requires output voltage measurement at two points, that is, the connector part as well as the part of the thin-film thermocouple element as the first thermocouple. As a result, a temperature measurement machine such as a data logger and a temperature display device having two input channels was essential.

In most cases of temperature measurement using the bulk thermocouple element of the related art, temperature measurement and control were performed by one bulk thermocouple element being connected to a temperature measurement machine such as a temperature display device that has only one input channel.

Accordingly, it was difficult to use the thin-film thermocouple element by connecting the thin-film thermocouple element to a temperature measurement machine having only one existing input channel in the same manner as a bulk thermocouple element. This difficulty might lead to a bulk thermocouple element user's determination that the thin-film thermocouple element would be difficult to use.

The present invention has been made in view of the above problems, and an object of the present invention is to provide a temperature calibration device converting a thermoelectromotive force such that a thin-film thermocouple element can be connected to a temperature display device for a multi-purpose bulk thermocouple element that has been used and a temperature measurement device using the temperature calibration device.

SOLUTION TO PROBLEM

The above object is achieved by a temperature measurement device of the present invention including a thin-film thermocouple element provided with at least one pair of thin films made of dissimilar metals, connected to each other at a temperature measurement contact on one end side, and having a pair of external contacts at the other end, a temperature display device calculating a temperature by using an input voltage and displaying the calculated temperature, and a temperature calibration device connected between the thin-film thermocouple element and the temperature display device. The temperature calibration device includes at least one pair of input terminals made of an electroconductive material and respectively connected to the pair of external contacts, at least one pair of output terminals made of an electroconductive material and respectively connected to a pair of conducting wires linked to the temperature display device, computation means for calibrating a detected value of a voltage between the at least one pair of input terminals and computing a calibrated voltage, and voltage application means for outputting the calibrated voltage between the at least one pair of output terminals. The temperature display device calculates a calibration temperature by using the calibrated voltage input via the at least one pair of output terminals and the pair of conducting wires and displays the calculated calibration temperature.

In the above configuration, the thin-film thermocouple element and the temperature calibration device can be connected to the temperature display device as if the element and the device were one bulk thermocouple element. As a result, there is no need to separately perform correction such as temperature conversion and it is possible to provide a temperature measurement device that uses an existing general temperature display device.

It is preferable at this time that the temperature measurement device further includes an output connector connected to the pair of conducting wires and the output connector is one in number.

By using the temperature calibration device as described above, it is possible to provide a temperature measurement device to which the thin-film thermocouple element is applied even when the temperature display device has only one input channel.

The above object is achieved by a temperature calibration device of the present invention connected to a thin-film thermocouple element provided with at least one pair of thin films made of dissimilar metals, connected to each other at a temperature measurement contact on one end side, and having a pair of external contacts at the other end. The temperature calibration device includes at least one pair of input terminals made of an electroconductive material and respectively connectable to the pair of external contacts, at least one pair of output terminals made of an electroconductive material and respectively connectable to the pair of conducting wires linked to a temperature display device calculating a temperature by using an input voltage and displaying the calculated temperature, computation means for calibrating a detected value of a voltage between the at least one pair of input terminals and computing a calibrated voltage, and voltage application means for outputting the calibrated voltage between the at least one pair of output terminals. The calibrated voltage is output to the temperature display device when the at least one pair of input terminals are connected to the pair of external contacts of the thin-film thermocouple element and the at least one pair of output terminals are connected to the temperature display device.

In the above configuration, the thin-film thermocouple element and the temperature calibration device can be used as if the element and the device were one bulk thermocouple element. As a result, there is no need to separately perform correction such as temperature conversion and it is possible to use the thin-film thermocouple element that has a film shape without changing equipment such as an existing general temperature display device.

It is preferable at this time that the temperature calibration device further includes an output connector connected to the pair of conducting wires and the output connector is one in number.

In such a configuration, the number of wires in the temperature calibration device can be smaller than in an existing temperature calibration device and the thin-film thermocouple element can be applied even to a temperature display device that has only one input channel.

It is preferable at this time that the computation means calculates the calibration temperature T by Equation (1) by using a preset temperature constant $T_0$ and a preset gradient constant a and calculates the calibrated voltage $V_1'$ by Equation (2) by using the calibration temperature T when the detected value of the voltage between the pair of input terminals is $V_1$.

$$T = a \times V_1 + T_0 \quad (1)$$

$$V_1' = T/b \quad (2)$$

(Here, the parameter a is a value calculated by an approximate curve obtained from a relationship between a thermoelectromotive force generated in the thin-film thermocouple element and a temperature difference between the external contact and the temperature measurement contact in the thin-film thermocouple element, the parameter $T_0$ is a temperature at the external contact of the thin-film thermocouple element, and the parameter b is a constant calculated by an approximate curve obtained from a relationship between a thermoelectromotive force generated in a bulk thermocouple element and a temperature difference between an external contact and a temperature measurement contact in the bulk thermocouple element.)

In such a configuration, it is possible to obtain a calibrated voltage corresponding to displaying the temperature of the temperature measurement contact on a temperature display from the thermoelectromotive force generated in the thin-film thermocouple element by using a relational expression using a pre-measurable constant.

It is preferable at this time that the temperature calibration device includes wireless transmission means for wirelessly transmitting the calibrated voltage to the temperature display device instead of the at least one pair of output terminals.

In such a configuration, wiring such as a conducting wire and an output connector is unnecessary. As a result, the use of the thin-film thermocouple element becomes easier, the scope of application of the thin-film thermocouple element widens, and it is also possible to measure the temperature of a location away from the temperature display device.

It is preferable at this time that the temperature calibration device further includes a connection portion detachably connecting the pair of external contacts to the at least one pair of input terminals.

In such a configuration, the thin-film thermocouple part can be replaced and the temperature calibration device can be repeatedly used for temperature measurement.

ADVANTAGEOUS EFFECTS OF INVENTION

When the temperature calibration device of the present invention is used, the thin-film thermocouple element and the temperature calibration device can be used as if the element and the device were one bulk thermocouple. As a result, it is possible to use the thin-film thermocouple element that has a film shape without changing equipment such as an existing general temperature display device.

In addition, it is possible to eliminate the inconvenience that it is necessary to correct the measured temperature in order to obtain an accurate temperature.

In addition, the thin-film thermocouple element can be attached to and detached from the temperature calibration device of the present invention. Accordingly, it is possible to regularly replace and continuously use the thin-film thermocouple element in a case where a temperature measurement device that uses the temperature calibration device of the present invention is adopted.

Further, the temperature calibration device of the present invention can be repeatedly used, and thus it is possible to reduce the cost of repeated use as compared with a product in which the current thin-film thermocouple element is inseparably coupled to a connector.

BRIEF DESCRIPTION OF DRAWINGS

FIG. 1 is a schematic diagram illustrating the configuration of a temperature measurement device using a temperature calibration device according to an embodiment of the present invention.

FIG. 2 is a schematic diagram illustrating a thin-film thermocouple element connected to the temperature calibration device according to an embodiment of the present invention.

FIG. 3 is a block diagram illustrating an electrical structure of the temperature calibration device according to an embodiment of the present invention.

FIG. 4 is a cross-sectional view taken along line I-I of FIG. 1 and illustrating a connection portion of the temperature calibration device according to an embodiment of the present invention.

FIG. 5 is a block diagram illustrating an electrical structure of a temperature display device according to an embodiment of the present invention.

FIG. 6 is a flowchart illustrating a temperature measurement method using the temperature calibration device according to an embodiment of the present invention.

FIG. 7 is a flowchart illustrating CPU control in a method for converting a thermoelectromotive force generated in a thin-film thermocouple according to an embodiment of the present invention.

FIG. 8 is a block diagram illustrating an electrical structure of a temperature calibration device according to a modification example of the embodiment of the present invention.

FIG. 9 is a block diagram illustrating an electrical structure of a temperature display device according to a modification example of the embodiment of the present invention.

FIG. 10 is a schematic diagram illustrating a bulk thermocouple element.

FIG. 11 is a graph illustrating the temperature-thermoelectromotive force characteristics of the thin-film thermocouple element and the bulk thermocouple element.

FIG. 12 is a graph illustrating the result of temperature measurement performed with the temperature display device and the thin-film thermocouple element connected by means of the temperature calibration device according to an embodiment of the present invention.

## DESCRIPTION OF EMBODIMENTS

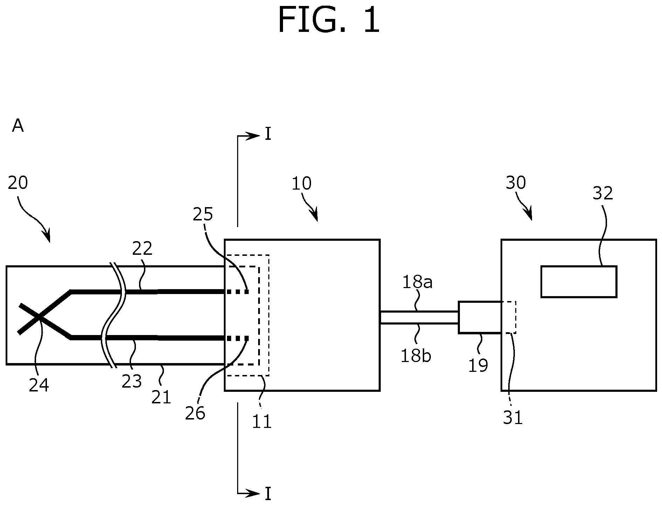

Hereinafter, a temperature calibration device according to an embodiment of the present invention, a temperature measurement device using the temperature calibration device, a method for converting a thermoelectromotive force generated in a thin-film thermocouple element using the temperature calibration device, and a temperature measurement method using the temperature calibration device will be described with reference to FIGS. 1 to 12.

<Temperature Measurement Device>

FIG. 1 illustrates a temperature measurement device A using a temperature calibration device 10 according to the present embodiment.

The main constituent elements of the temperature measurement device A are a thin-film thermocouple element 20 provided with a pair of thin films made of dissimilar metals, connected to each other at a temperature measurement contact on one end side, and having a pair of external contacts at the other end, a temperature display device 30 calculating a temperature by using an input voltage and displaying the calculated temperature, and the temperature calibration device 10 connected between the thin-film thermocouple element 20 and the temperature display device 30.

As illustrated in FIG. 1, the temperature measurement device A is configured by external contacts 25 and 26 of the thin-film thermocouple element 20 as a temperature measurement element being connected to a connection portion 11 of the temperature calibration device 10 and an output connector 19 of the temperature calibration device 10 being connected to connection means 31 of the temperature display device 30.

The temperature calibration device 10 of the present embodiment has a function of calibrating the thermoelectromotive force that is generated in the thin-film thermocouple element 20 and converting the temperature of a temperature measurement contact 24 into a calibrated voltage corresponding to the display on the temperature display device 30.

<Thin-film Thermocouple Element>

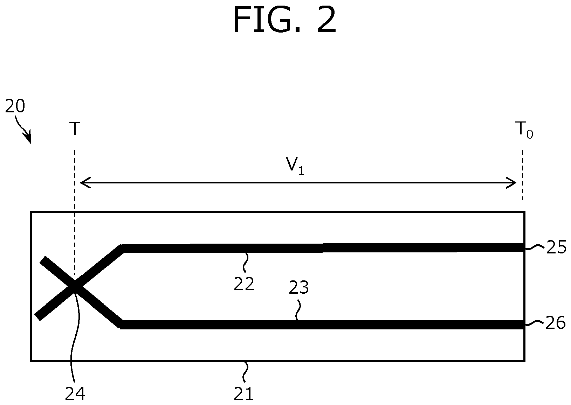

FIG. 2 is a schematic diagram of the thin-film thermocouple element 20 connected to the temperature calibration device 10 according to the present embodiment.

The thin-film thermocouple element 20 includes a pair of electroconductive thin films 22 and 23 formed of the pair of thin films made of different metals on a substrate 21 such as a long and rectangular film and extending in parallel along the longitudinal direction. The pair of electroconductive thin films 22 and 23 intersect with each other on one end portion side, and the points of intersection are connected to form the temperature measurement contact 24 for measuring the temperature of an object. The external contacts 25 and 26, which are open ends, are provided at the other ends of the pair of electroconductive thin films 22 and 23.

At the external contacts 25 and 26, the thin-film thermocouple element 20 is connected to a pair of input terminals 12a and 12b provided in the connection portion 11 of the temperature calibration device 10, respectively.

The electroconductive thin films 22 and 23 are dissimilar materials. At the temperature measurement contact 24, the electroconductive thin films 22 and 23 are joined so as to overlap each other.

Glass, a film, metal, or the like can be used as the substrate 21 forming the thin-film thermocouple element 20. However, in a case where the substrate 21 is made of an electroconductive material such as metal, it is necessary to form the thin-film thermocouple element after pre-forming an insulating film of $SiO_2$, $Al_2O_3$, or the like on the surface of the metal.

Accordingly, it is preferable to use a film. Glass and a film require no pretreatment whereas an electroconductive substrate such as a metal substrate requires pretreatment, and thus are preferable in that no operation becomes complicated. In addition, the strength of the thin-film thermocouple element can be increased by the flexibility of the film. It is more preferable to use a polyimide film. The polyimide film is a material suitable for the substrate of the thin-film thermocouple element in that the polyimide film is bendable, hardly breaks even at a substrate thickness of tens of microns, is easy to handle, and is relatively stable even at a temperature of over 200°C.

The thickness of the substrate 21 is preferably 1 $\mu$m or more and 150 $\mu$m or less, more preferably 1 $\mu$m or more and 50 $\mu$m or less, and particularly preferably 1 $\mu$m or more and 18 $\mu$m or less.

Usable as the combinations of the dissimilar metals that constitute the electroconductive thin films of the thin-film thermocouple element 20 are chromel-alumel, PtRh-Pt, chromel-constantan, nicrosil-nisil, Cu-constantan, Fe-constantan, Ir-IrRh, W-Re, Au-Pt, Pt-Pd, Bi-Sb, and so on. It is preferable to use the combination of chromel-alumel, which has a wide working temperature range and a linear temperature-thermoelectromotive force relationship.

Usable as a method for forming the electroconductive thin film is a vacuum film forming method such as a sputtering method, an electron beam evaporation method, and a heating evaporation method, a coating method, or the like. It is preferable to use a vacuum film forming method by which a thinner and uniform thin film can be formed. It is more preferable to use a sputtering method having little difference in atomic composition from a vapor deposition material and allowing uniform film formation.

It is desirable that the thin-film thermocouple element 20 is covered with a protective film. This is because the protective film not only enhances the environmental resistance of the thin-film thermocouple element but also has an effect of preventing the cracking that may arise when the thin-film thermocouple element is deformed by an external force. Examples of the protective film that is applicable include a polyimide film obtained by a screen printing method and an insulating film where $SiO_2$, $Al_2O_3$, or the like is formed by an evaporation method, a sputtering method, a dipping method, or the like. It is preferable to use a highly heat-resistant, chemical-resistant, and adhesive polyimide film.

The thickness of the electroconductive thin films 22 and 23 is preferably 50 nm or more and 1 $\mu$m or less, more preferably 300 nm or more and 500 nm or less, and more preferably 100 nm or more and 250 nm or less.

<Temperature Calibration Device>

The temperature calibration device 10 according to the present embodiment has a function of performing computation by using the thermoelectromotive force generated in the thin-film thermocouple element 20 and converting the temperature of the temperature measurement contact 24 into the calibrated voltage corresponding to the display on the temperature display device 30.

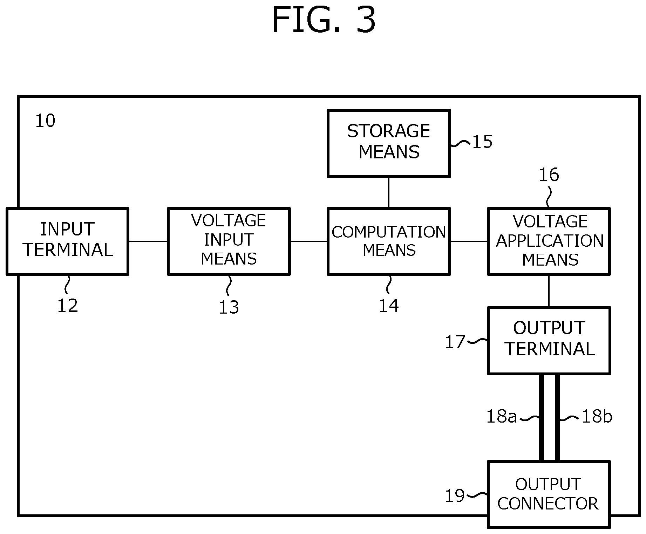

As illustrated in FIG. 3, the temperature calibration device 10 according to the present embodiment includes the pair of input terminals 12 provided in the connection portion 11 for connecting the thin-film thermocouple element 20, voltage input means 13 to which the thermoelectromotive force generated in the thin-film thermocouple element 20 is input, computation means 14 for calculating the calibrated voltage from the detected value of the input thermoelectromotive force, storage means 15 for storing a control program, various relational expressions, or the like necessary for the computation means 14 to perform various types of control, voltage application means 16 for outputting the calculated calibrated voltage, an output terminal 17, conducting wires 18a and 18b, and the output connector 19.

Hereinafter, each constituent element of the temperature calibration device 10 will be described in detail.

(Connection Portion and Input Terminal)

The connection portion 11 is to electrically connect the external contacts 25 and 26 of the thin-film thermocouple element 20 to the voltage input means 13. The connection portion 11 has a known detachable connection structure in which an elastic object for crimping is provided on the side of the substrate 21 of the thin-film thermocouple element 20 that lacks the electroconductive thin films 22 and 23.

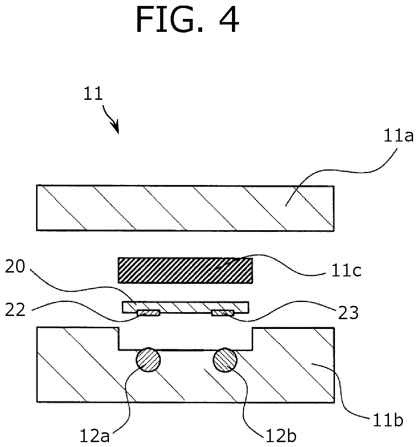

Specifically, as in the cross-sectional view illustrated in FIG. 4, the connection portion 11 includes a housing (lid side) 11a and a housing (main body side) 11b and an elastic object 11c for crimping is provided on the side of the substrate 21 that has no electroconductive thin film so that the electroconductive thin film 22 is crimped to the input terminal 12a and the electroconductive thin film 23 is crimped to the input terminal 12b.

Accordingly, the thin-film thermocouple element 20 can be detachably connected to the connection portion 11, and thus replacement with the thin-film thermocouple element 20 that is new is possible in a case where the thin-film thermocouple element 20 is consumed.

(Voltage Input Means)

Input to the voltage input means 13 is the thermoelectromotive force that is generated between the input terminal 12a of the connection portion 11 connected to the external contact 25 of the electroconductive thin film 22 and the input terminal 12b of the connection portion 11 connected to the external contact 26 of the electroconductive thin film 23.

The voltage input means 13 includes an A/D conversion unit that A/D-converts the input thermoelectromotive force into a digital signal and inputs the detected value of the A/D-converted thermoelectromotive force to the computation means 14.

(Computation Means)

The computation means 14 includes a CPU, has a function as a control unit outputting an instruction signal for performing various types of control in the temperature calibration device 10 based on the program stored in the storage means 15, and has a function of performing various types of computation in accordance with the relational expressions stored in the storage means 15.

The computation means 14 calculates the temperature (calibration temperature) at the temperature measurement contact 24 of the thin-film thermocouple element 20 from the detected value of the A/D-converted thermoelectromotive force input from the voltage input means 13 by referring to the relational expression (such as Equation (1)) stored in the storage means 15.

Then, the computation means 14 calculates the calibrated voltage corresponding to displaying the temperature (calibration temperature) at the temperature measurement contact 24 of the thin-film thermocouple element 20 on temperature display means 32 of the temperature display device 30 based on the relational expression (such as Equation (2)) between the display temperature and the input voltage in temperature calculation means 33 of the temperature display device 30 stored in the storage means 15.

Then, the computation means 14 outputs the calculated calibrated voltage to the voltage application means 16.

(Storage Unit)

The storage means 15 includes a storage medium such as a RAM or the like. The control program necessary for the computation means 14 to perform various types of control such as the control program for executing the method for converting the thermoelectromotive force generated in the thin-film thermocouple of the present embodiment, the various relational expressions, or the like are stored in advance in the storage means 15.

The storage means 15 stores the relational expression (the following Equation (1)) for calculating the temperature of the temperature measurement contact 24 from the detected value of the voltage between the pair of input terminals 12a and 12b generated between the external contact 25 and the external contact 26 of the thin-film thermocouple element 20 and the relational expression (the following Equation (2)) between the display temperature and the input voltage in the temperature calculation means 33 of the temperature display device 30.

The following Equation (1) represents the relational expression for calculating a temperature (calibration temperature) $T$ of the temperature measurement contact 24 from a detected value $V_1$ of the voltage between the pair of input terminals 12a and 12b stored in the storage means 15.

$$T = a \times V_1 + T_0 \qquad (1)$$

Here, the parameter $a$ is a gradient constant calculated by an approximate curve obtained from the relationship between the thermoelectromotive force generated in the thin-film thermocouple element and the temperature difference between the external contact and the temperature measurement contact in the thin-film thermocouple element and the parameter $a$ is a value determined by, for example, the thicknesses and the lengths of the electroconductive thin films 22 and 23 or the combination of the dissimilar metals that constitute the electroconductive thin films of the thin-film thermocouple element 20 that is used.

The parameter $T_0$ is the temperature (temperature constant) at the external contacts 25 and 26 of the electroconductive thin film 22 measured by means of a bulk thermocouple element.

The following Equation (2) represents the relational expression between the display temperature T and an input voltage $V_1'$ in the temperature calculation means 33 of the temperature display device 30 stored in the storage means 15.

$$V_1' = T/b \qquad (2)$$

Here, the parameter b is a constant calculated by an approximate curve obtained from the relationship between the thermoelectromotive force generated in the bulk thermocouple element and the temperature difference between the external contact and the temperature measurement contact in a bulk thermocouple element 20'.

Rewritable is information such as the control program and the relational expressions stored in the storage means 15. The information stored in the storage means 15 is rewritten by connection being performed to an external device such as a personal computer (PC) via an external communication unit (USB terminal, not illustrated) provided in the temperature calibration device 10 and the external device rewriting the information.

(Voltage Application Means)

The voltage application means 16 has a function of generating the calibrated voltage input from the computation means 14. The voltage application means 16 includes a D/A conversion unit converting the calibrated voltage input from the computation means 14 into an analog signal and outputs the D/A-converted calibrated voltage to the temperature display device 30 via a pair of the output terminals 17, the pair of conducting wires 18, and the output connector 19.

(Output Terminal)

The output terminals 17a and 17b are the pair of output terminals 17 made of an electroconductive material and connected to the pair of conducting wires 18a and 18b, respectively. The calibrated voltage is output by the voltage application means 16 between the output terminals 17a and 17b.

(Conducting Wire and Output Connector)

The pair of conducting wires 18 and the output connector 19 have a function for inputting the calibrated voltage output between the pair of output terminals 17 by the voltage application means 16 to an external device such as the temperature display device 30.

The pair of conducting wires 18 have one output connector 19 in end portions. The output connector 19 is connected to the connection means 31 of the temperature display device 30.

The conducting wire 18a of the pair of conducting wires 18 is connected to the output terminal 17a of the pair of output terminals 17. The conducting wire 18b of the pair of conducting wires 18 is connected to the output terminal 17b of the pair of output terminals 17.

The calibrated voltage output between the output terminals 17a and 17b by the voltage application means 16 is input to the temperature calculation means 33 via the connection means 31 of the temperature display device 30.

The temperature calibration device 10 according to the present embodiment has only one output connector 19 connected to the pair of conducting wires 18 and can also be used with respect to the one channel-type temperature display device 30 to which one connector can be connected.

<Temperature Display Device>

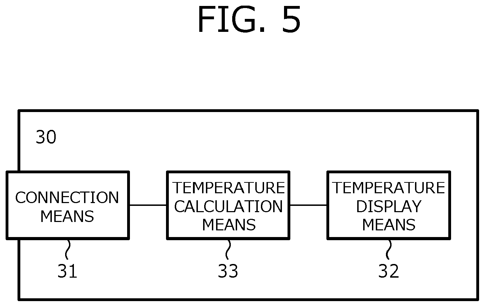

As illustrated in FIG. 5, the temperature display device 30 used in the temperature measurement device A of the present embodiment is a general temperature display device or temperature measurement device including the one channel-type connection means 31 to which one connector can be connected, the temperature calculation means 33 for calculating a temperature by using a voltage input via the connection means 31, and the temperature display means 32 for displaying the temperature calculated by the temperature calculation means 33.

The output connector 19 provided in the end portions of the pair of conducting wires 18 of the temperature calibration device 10 is connected to the connection means 31 of the temperature display device 30.

Although the temperature display means 32 in FIGS. 1 and 5 is a display unit provided in the temperature display device 30, the present invention is not limited thereto. It is also possible to connect an external device such as a PC having a display screen to the temperature display device 30 and use the display screen of the external device as the temperature display means 32.

The temperature calculation means 33 has a function of converting an input voltage into a corresponding temperature.

Although a general temperature display device can be used as the temperature display device 30 insofar as the device is capable of calculating a corresponding temperature by using an input voltage and displaying the calculated temperature, the present invention is not limited thereto. It is also possible to use a special temperature display device such as a temperature display device having various computation functions.

The calibrated voltage computed by the computation means 14 of the temperature calibration device 10 is input to the temperature calculation means 33. The temperature calculation means 33 calculates a corresponding temperature by using the input calibrated voltage and displays the calculated temperature on the temperature display means 32.

The temperature calibration device 10 computes and outputs the calibrated voltage such that the temperature at the temperature measurement contact 24 of the thin-film thermocouple element 20 is correctly displayed. Accordingly, the accurate temperature of the temperature measurement contact 24 can be displayed on the temperature display means 32 of the temperature display device 30.

<Calibration of Thermoelectromotive Force Performed by Temperature Calibration Device>

The conversion (calibration) of the thermoelectromotive force generated in the thin-film thermocouple element 20 into the calibrated voltage in the temperature calibration device 10 will be described together with A. Relationship between Thermoelectromotive Force and Temperature Difference in Thin-film Thermocouple Element and Bulk Thermocouple Element, B. Temperature Display in Temperature Display Device, and C. Computation in Temperature Calibration Device.

(A. Relationship between Thermoelectromotive Force and Temperature Difference in Thin-film Thermocouple Element and Bulk Thermocouple Element)

The relationship between the thermoelectromotive force and the temperature difference in the thin-film thermocouple element 20 is defined by the following Equation (3).

$$t = a \times v \quad (3)$$

Here, t is the temperature difference between the temperature measurement contact 24 and the external contacts 25 and 26, v is the thermoelectromotive force that is generated between the external contact 25 and the external contact 26 (also referred to as the thermoelectromotive force that is generated in the thin-film thermocouple element 20), and a is a gradient constant calculated by an approximate curve obtained from the relationship between the temperature difference t and the thermoelectromotive force v that is generated.

The relationship between the thermoelectromotive force and the temperature difference in the bulk thermocouple element 20' (K-type thermocouple element) is defined by the following Equation (4).

$$T = b \times V \quad (4)$$

Here, T is the temperature difference between a temperature measurement contact 24' and external contacts 25' and 26', V is the thermoelectromotive force that is generated between the external contact 25' and the external contact 26' (also referred to as the thermoelectromotive force that is generated in the bulk thermocouple element 20'), and b is a gradient constant calculated by an approximate curve obtained from the relationship between the temperature difference T and the thermoelectromotive force V that is generated.

The thin-film thermocouple element 20 and the bulk thermocouple element 20' have different thermoelectromotive forces generated with respect to the same temperature difference. In other words, $a \times V$ is equal to $b \times v$ and V is not equal to v when T is equal to t.

FIG. 11 is a graph illustrating temperature-thermoelectromotive force characteristics of the thin-film thermocouple element 20 and the bulk thermocouple element 20'. The thermoelectromotive force that is generated in the thin-film thermocouple element 20 is approximately 70% of the thermoelectromotive force that is generated in the bulk thermocouple element 20' (K-type thermocouple element).

(B. Temperature Display in Temperature Display Device)

The temperature display device 30 displays the temperature based on Equation (4), which is the temperature-thermoelectromotive force characteristics of the bulk thermocouple element 20'.

Specifically, in the temperature calculation means 33 of the temperature display device 30, the temperature T is calculated by the thermoelectromotive force V generated between the external contact 26' and the external contact 25' of the bulk thermocouple element 20' being multiplied by the preset constant b. The temperature display means 32 displays the temperature T.

Accordingly, in a case where the thin-film thermocouple element 20 is directly connected to the temperature display device 30, the actual temperature is different from the display temperature displayed on the temperature display means 32.

The display temperature is different because the temperature-thermoelectromotive force relationship of the thin-film thermocouple element 20 follows Equation (3) whereas the general temperature display device 30 calculates the temperature based on Equation (4), which is the temperature-thermoelectromotive force characteristics of the bulk thermocouple element 20'.

In the temperature calibration device 10 of the present embodiment, correction in accordance with the equation of the temperature-thermoelectromotive force characteristics of the bulk thermocouple element 20' is performed by this deviation amount being used as a correction value.

(C. Computation in Temperature Calibration Device)

As illustrated in FIGS. 2 and 10, the temperature difference between the temperature measurement contact and the external contact is $T - T_0$ when the temperatures of the temperature measurement contact 24 of the thermocouple (thin-film thermocouple element 20) and the temperature measurement contact 24' of the thermocouple (bulk thermocouple element 20') are T and the temperatures of the external contacts 25, 26, 25', and 26' of the thermocouples are $T_0$.

The following Equation (5) is derived from Equation (3) with regard to the thin-film thermocouple element 20.

$$T - T_0 = a \times V_1 \qquad (5)$$

Here, $V_1$ is the thermoelectromotive force that is generated between the external contact 25 and the external contact 26 of the thin-film thermocouple element 20.

The following Equation (6) is derived from Equation (4) with regard to the bulk thermocouple element 20'.

$$T - T_0 = b \times V_2 \qquad (6)$$

Here, $V_2$ is the thermoelectromotive force that is generated between the external contact 25' and the external contact 26' of the bulk thermocouple element 20'.

The following Equation (7) is established when the temperature display in a case where the thin-film thermocouple element 20 is connected to the temperature display device 30 is $T_1$.

$$T_1 = b \times V_1 + T_0 \qquad (7)$$

The following Equation (8) is obtained when Equation (7) is transformed and $V_1$ obtained by Equation (5) being transformed is used as a substitute.

$$T_1 - T_0 = (b/a) \times (T - T_0) \qquad (8)$$

Here, $T_1$ can be measured by the thin-film thermocouple element 20 being connected to the temperature display device 30 and T and $T_0$ can be measured by means of the bulk thermocouple element 20'. Accordingly, (b/a) can be obtained by the measured values of $T_1$, T, and $T_0$ being substituted into the above Equation (8) .

When $(1/\alpha)$ is equal to (b/a), the above Equation (8) can be transformed into the following Equation (9).

$$T = \alpha \times T_1 + (1 - \alpha) \times T_0 \qquad (9)$$

In addition, transformation into the following Equation (1) is possible when $T_1$ of Equation (7) is substituted into Equation (9).

$$T = (a/b) \times b \times V_1 + T_0$$
$$= a \times V_1 + T_0 \qquad (1)$$

Here, $T_0$ can be measured by the bulk thermocouple element 20' and conversion into the following Equation (10) is possible by Equation (4) being used.

$$T = a \times V_1 + b \times V_0 \qquad (10)$$

Accordingly, Equation (10) corresponds to a case where $V_2$ is $V_0$ and $T_c$ is 0 in the equation of JP 2010-190735 A ($T = aV_1 + bV_2 + T_c$).

(D. Conversion of Thermoelectromotive Force Generated in Thin-film Thermocouple Element into Calibrated Voltage)

In the above Equation (1), the gradient constant a can be calculated by an approximate curve obtained from the relationship between the temperature difference in the thin-film thermocouple element 20 and the thermoelectromotive force that is generated and $T_0$ (= $b \times V_0$) can be measured by the bulk thermocouple element 20'. Accordingly, it is possible to calculate the temperature T of the temperature measurement contact 24 from the value of the thermoelectromotive force $V_1$ generated between the external contact 25 and the external contact 26 of the thin-film thermocouple element 20.

The computation means 14 of the temperature calibration device 10 calculates the temperature T at the temperature measurement contact 24 of the thin-film thermocouple as the calibration temperature from the thermoelectromotive force $V_1$ generated between the external contact 25 and the external contact 26 of the thin-film thermocouple element 20 by using the above Equation (1) stored in the storage means 15.

Then, the computation means 14 causes the voltage application means 16 to generate the calibrated voltage $V_1'$ corresponding to displaying the calibration temperature T on the temperature display means 32 based on the above Equation (2) stored in the storage means 15, which is a relational expression between the temperature and the input voltage in the temperature calculation means 33 of the temperature display device 30.

Accordingly, it is possible to cause the temperature display means 32 of the temperature display device 30 to display the temperature T at the temperature measurement contact by connecting the temperature calibration device 10 according to the present embodiment between the thin-film thermocouple element 20 and the temperature display device 30.

<Temperature Measurement Method Using Temperature Calibration Device>

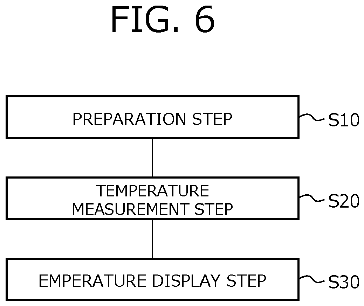

As illustrated in FIG. 6, a preparation step (Step S10) of preparing the temperature measurement device using the temperature calibration device, a temperature measurement step (Step S20) of performing temperature measurement by using the temperature measurement device prepared in the preparation step, and a temperature display step (Step S30) of displaying the temperature measured in the temperature measurement step on the temperature display device are performed in the temperature measurement method using the temperature calibration device 10 according to the present embodiment.

(A. Preparation Step)

Performed first in the preparation step (Step S10) is a storage step for the storage means 15 of the temperature calibration device 10 to store a relational expression (such as Equation (1)) for calculating the temperature T of the temperature measurement contact as the calibration temperature from the thermoelectromotive force $V_1$ as a detected value generated in the thin-film thermocouple element 20 and detected between the pair of input terminals 12 and a relational expression (such as Equation (2)) for calculating the calibrated voltage $V_1'$ corresponding to displaying the calculated temperature T of the temperature measurement contact on the temperature display device 30.

Specifically, the storage means 15 stores Equation (1) into which the pre-measured constants a and $T_0$ (= b × $V_0$) are substituted. Likewise, the storage means 15 stores Equation (2), which is a relational expression between the display temperature and the input voltage in the temperature calculation means 33 of the temperature display device 30 used with the temperature calibration device 10.

The storage of the information stored in the storage means 15 is performed by connection to the external device such as the personal computer (PC) via an external input unit (USB terminal, not illustrated) provided in the temperature calibration device 10.

This storage step can be performed by a user who performs temperature measurement by using the temperature calibration device 10. Alternatively, a manufacturer may perform the storage step in a manufacturing stage for the temperature calibration device 10 or a seller may perform the storage step in a selling stage for the temperature calibration device 10.

Next, an assembly step for assembling the temperature measurement device A is performed by using the temperature calibration device 10 in which the relational expression is stored in the storage means 15 in the storage step described above, the thin-film thermocouple element 20, and the temperature display device 30.

As illustrated in FIG. 1, in the assembly step, the temperature measurement device A is assembled by the external contacts 25 and 26 of the thin-film thermocouple element 20 as the temperature measurement element being connected to the connection portion 11 of the temperature calibration device 10 and the output connector 19 of the temperature calibration device 10 being connected to the connection means 31 of the temperature display device 30.

(B. Temperature Measurement Step)

In the temperature measurement step (Step S20), which is subsequent to the preparation step, the temperature measurement device A using the temperature calibration device 10 is used and the method for converting the thermoelectromotive force generated in the thin-film thermocouple element according to the present embodiment is executed.

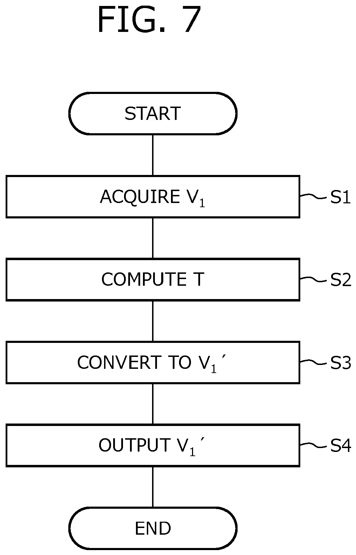

As illustrated in FIG. 7, in the method for converting the thermoelectromotive force generated in the thin-film thermocouple according to the present embodiment, a thermoelectromotive force detection step (Step S1) of detecting the thermoelectromotive force generated in the thin-film thermocouple formed by the pair of thin films made of different metals on the substrate, having the temperature measurement contact on one end side, and having the external contacts of the thin films on the other end side, a computation step (Step S2 and Step S3) of converting the calibrated voltage by performing computation by using the detected thermoelectromotive force, and a calibrated voltage output step (Step S4) of outputting the calculated calibrated voltage are performed. In the computation step, the temperature of the temperature measurement contact is calculated by the thermoelectromotive force detected in the thermoelectromotive force detection step being computed (Step S2) and the calibrated voltage corresponding to displaying the calculated temperature on the temperature display device is calculated (Step S3).

Hereinafter, each step will be described in detail with reference to FIG. 7. The control program related to the program processing of FIG. 7 is stored in the storage means 15. The CPU 14 that constitutes the computation means 14 controls the program processing based on the control program stored in the storage means 15.

The program processing of FIG. 7 starts when the thin-film thermocouple element 20 is connected to the connection portion 11 of the temperature calibration device 10 and the output connector 19 of the temperature calibration device 10 is connected to the connection means 31 of the temperature display device 30.

(Thermoelectromotive Force Detection Step)

After the initiation of the program processing of FIG. 7, the thermoelectromotive force $V_1$ generated in the thin-film thermocouple element 20 is acquired first in Step S1 (thermoelectromotive force detection step). The thin-film thermocouple element 20 is formed by the pair of electroconductive thin films 22 and 23 made of different metals on the substrate 21, has the temperature measurement contact 24 on one end side, and is provided with the external contacts 25 and 26 of the thin films on the other end side.

Specifically, the CPU 14 detects the thermoelectromotive force $V_1$ input to the pair of input terminals 12, A/D-converted into a digital signal by the voltage input means 13, and generated between the external contacts of the thin-film thermocouple element 20.

(Computation Step)

In the computation step (Step S2 and Step S3), the calibrated voltage $V_1'$ is calculated by computation being performed by means of the thermoelectromotive force $V_1$ detected in the thermoelectromotive force detection step.

Specifically, the CPU 14 calculates the temperature T at the temperature measurement contact 24 of the thin-film thermocouple element 20 from the thermoelectromotive force $V_1$ A/D-converted by the voltage input means 13 by referring to the relational expression (such as Equation (1)) stored in the storage means 15 (Step S2).

Next, the CPU 14 calculates the calibrated voltage $V_1$' corresponding to displaying the temperature T (calibration temperature) at the temperature measurement contact 24 of the thin-film thermocouple element 20 on the temperature display means 32 by referring to the relational expression (such as Equation (2)) between the display temperature and the voltage signal input to the temperature calculation means 33 of the temperature display device 30 stored in the storage means 15 (Step S3).

(Calibrated Voltage Output Step)

The calibrated voltage $V_1$' calculated in the computation step is output in the calibrated voltage output step (Step S4) .

Specifically, the CPU 14 causes the calculated calibrated voltage $V_1$' to be D/A-converted into an analog signal in the voltage application means 16, outputs the D/A-converted calibrated voltage $V_1$' between the pair of output terminals 17, and causes the voltage to be output to the temperature display device 30 via the pair of conducting wires 18 and the output connector 19.

The program processing ends after the calibrated voltage $V_1$' is output in the calibrated voltage output step (Step S4) .

The program processing of FIG. 5 may be intermittently repeated at predetermined intervals and a predetermined number of times or continuously repeated for a predetermined period in accordance with the purpose when temperature measurement is performed by means of the thin-film thermocouple element 20.

The thermoelectromotive force $V_1$ generated in the thin-film thermocouple element 20 is converted into the calibrated voltage $V_1$' corresponding to displaying the temperature T at the temperature measurement contact 24 on the temperature display means 32 of the temperature display device 30 by the method for converting the thermoelectromotive force generated in the thin-film thermocouple according to the present embodiment and the converted calibrated voltage $V_1$' is output.

(C. Temperature Display Step)

Performed subsequently to the temperature measurement step is the temperature display step (Step S30) of displaying the calibration temperature T on the temperature display device 30 based on the calibrated voltage $V_1$' corresponding to the calibration temperature T.

In the temperature display step, the temperature T (calibration temperature) at the temperature measurement contact 24 is displayed on the temperature display means 32 of the temperature display device 30 based on the calibrated voltage $V_1$' converted by the method for converting the thermoelectromotive force generated in the thin-film thermocouple described above.

Accordingly, by the temperature measurement method using the temperature calibration device, it is possible to display the accurate temperature at the temperature measurement contact 24 by using the existing and commonly used temperature display device 30 as it is even in a case where the thin-film thermocouple element 20 is used.

The temperature calibration device according to the present invention, the temperature measurement device using the temperature calibration device, the method for converting the thermoelectromotive force generated in the thin-film thermocouple, and the temperature measurement method using the temperature calibration device have been mainly described in the present embodiment.

However, the embodiment described above is merely an example for facilitating the understanding of the present invention and does not limit the present invention. The present invention can be modified and improved within the spirit of the invention, and it is a matter of course that the present invention includes equivalents thereof.

<Modification Examples>

Although an example in which the output connector 19 provided in the end portions of the pair of conducting wires 18 of the temperature calibration device 10 is wire-connected to the connection means 31 of the temperature display device 30 has been illustrated in the embodiment described above, the connection between the temperature calibration device 10 and the temperature display device 30 is not limited to the wired connection and may be performed by wireless communication.

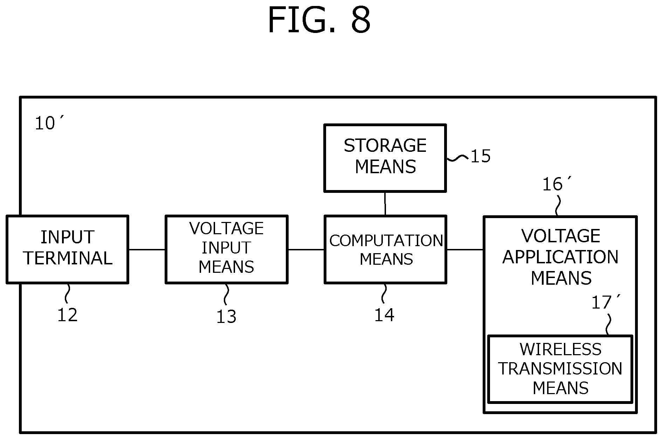

For example, as illustrated in FIG. 8, the calibrated voltage computed by the computation means 14 can be wirelessly transmitted to the outside with voltage application means 16' of a temperature calibration device 10' provided with wireless transmission means 17' instead of the pair of output terminals 17.

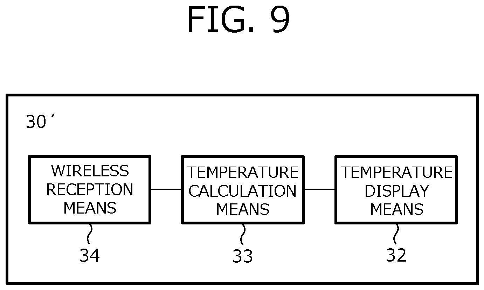

On the other hand, as illustrated in FIG. 9, a temperature display device 30' has wireless reception means 34 and is configured to receive the calibrated voltage that is transmitted from the wireless transmission means 17' of the temperature calibration device 10'.

Here, the wireless reception means 34 of the temperature display device 30' can be used as the wireless reception means 34 by a commercially available wireless receiver being connected to the connection means 31 as well as by using the function that is originally provided in the temperature display device 30'.

Wiring such as the conducting wire 18 and the output connector 19 is unnecessary in a case where the temperature calibration device is provided with the wireless transmission means 17' as described above. As a result, the use of the thin-film thermocouple element becomes easier, the scope of application of the thin-film thermocouple element widens, and it is also possible to measure the temperature of a location away from the temperature display device 30.

Also usable in combination are an external device such as a PC as the temperature display device 30' that has the wireless reception means 34 with a dedicated application installed to convert a voltage signal into a temperature and the temperature calibration device 10' equipped with the wireless transmission means 17'.

Specifically, a calibration voltage signal transmitted from the wireless transmission means 17' of the temperature calibration device 10' can be received by the wireless reception means 34 of the external device as the temperature display device 30', data processing can be performed by the dedicated application, and the calculated temperature can be output on the display device of the external device as the temperature display device 30'.

Although an example in which the temperature T at the temperature measurement contact 24 of the thin-film thermocouple is calculated as the calibration temperature from the thermoelectromotive force $V_1$ generated in the thin-film thermocouple element 20 by the relational expression represented by Equation (1) being used and the calibrated voltage $V_1'$ corresponding to displaying the calibration temperature T on the temperature display means 32 is calculated by the relational expression represented by Equation (2) being used has been illustrated in the embodiment described above, the relational expression that is used is not limited to Equation (1) and Equation (2) insofar as the calibrated voltage $V_1'$ can be calculated from the thermoelectromotive force $V_1$ by the relational expression being used.

For example, it is possible to calculate the calibrated voltage $V_1'$ corresponding to displaying the calibration temperature T on the temperature display means 32 from the thermoelectromotive force $V_1$ generated in the thin-film thermocouple element 20 by using the following Equation (11) obtained by T of Equation (1) being substituted into Equation (2) .

$$V_1' = (a \times V_1 + T_0)/b \qquad (11)$$

Here, the parameter a is a gradient constant calculated by an approximate curve obtained from the relationship between the thermoelectromotive force that is generated in the thin-film thermocouple element and the temperature difference between the external contact and the temperature measurement contact in the thin-film thermocouple element, the parameter $T_0$ is the temperature (temperature constant) at the external contacts 25 and 26 of the electroconductive thin film 22 measured by means of the bulk thermocouple element, and the parameter b is a constant calculated by an approximate curve obtained from the relationship between the thermoelectromotive force that is generated in the bulk thermocouple element and the temperature difference between the external contact and the temperature measurement contact in the bulk thermocouple element 20'.

Although an example in which the thin-film thermocouple element connected to the temperature calibration device has one pair of thin films made of dissimilar metals, connected to each other at the temperature measurement contact on one end side, and having the pair of external contacts at the other end has been illustrated in the embodiment described above, it is also possible to use a thin-film thermocouple element for multi-point measurement provided with two or more pairs of thin films (a plurality of pairs of thin films).

In this case, the temperature calibration device is configured to include two or more pairs of input terminals made of an electroconductive material and two or more pairs of output terminals made of an electroconductive material.

Further, computation means for computing calibrated voltages by calibrating each of the detected values of the voltages between the plurality of input terminals and voltage application means for outputting the respective calibrated voltages between the plurality of output terminals are provided and the calibrated voltage is output to the temperature display device when the plurality of input terminals are respectively connected to the plurality of external contacts provided in the thin-film thermocouple element and the plurality of output terminals are connected to the temperature display device.

In such a configuration, the temperature calibration device and the thin-film thermocouple element for multi-point measurement can be used as if the device and the element were one bulk thermocouple element. As a result, there is no need to separately perform correction such as temperature conversion and it is possible to use the thin-film thermocouple element for multi-point measurement that has a film shape without changing equipment such as an existing general temperature display device.

[Example]

Hereinafter, a specific example in which temperature measurement is performed by means of the temperature calibration device of the present invention will be described. The present invention is not limited thereto.

First, information such as the control program and the various relational expressions necessary for the computation means 14 to perform various types of control was pre-stored in the storage means 15 of the temperature calibration device 10.

The relational expressions stored in the storage means 15 are the relational expression ($T = a \times V_1 + T_0$, Equation (1)) for calculating the temperature T of the temperature measurement contact 24 from the thermoelectromotive force $V_1$ generated between the external contact 25 and the external contact 26 of the thin-film thermocouple element 20 and the relational expression ($V_1' = T/b$, Equation (2)) between the display temperature T and the input voltage $V_1'$ in the temperature calculation means 33 of the temperature display device 30.

Here, as for the parameters a and $T_0$ of Equation (1), 31.581 [°C/μV] was used as a and 25 [°C] was used as $T_0$ on the high temperature side and 30.701 [°C/μV] was used as a and 25 [°C] was used as $T_0$ on the low temperature side. 24.497 [°C/μV] was used as the parameter b of Equation (2).

Next, as illustrated in FIG. 1, the temperature measurement device A was configured by the temperature calibration device 10 according to the present embodiment being connected between the temperature display device 30 and the thin-film thermocouple element 20 as a temperature measurement element.

Specifically, the temperature measurement device A was assembled by the external contacts 25 and 26 of the thin-film thermocouple element 20 being connected to the connection portion 11 of the temperature calibration device 10 and the output connector 19 of the temperature calibration device 10 being connected to the connection means 31 of the temperature display device 30.

Here, in this example, chromel-alumel was used as the material metal of the thin-film thermocouple element 20 and the thin-film thermocouple was formed on the substrate 21 of a polyimide film by a sputtering method. Further, a polyimide film different from the substrate 21 was allowed to adhere to the thin-film thermocouple to serve as a protective film.

In this example, a general temperature display device provided with the one channel-type connection means 31 to which one connector can be connected, the temperature display means 32, and the temperature calculation means 33 converting an input voltage into a corresponding temperature (temperature measurement device for a K-type thermocouple, 34970A manufactured by Agilent) was used as the temperature display device 30.

FIG. 11 illustrates the relationship between the thermoelectromotive force and the temperature difference between the external contacts 25 and 26 and the temperature measurement contact 24 of the thin-film thermocouple at a time when temperature measurement was performed by the thin-film thermocouple element 20 in this example. The thermoelectromotive force of the thin-film thermocouple element 20 was approximately 70% of the thermoelectromotive force of the bulk thermocouple element 20' (K-type thermocouple element). In addition, FIG. 11 also plots the temperature dependence of the thermoelectromotive force after temperature calibration.

The temperature calibration device 10 is capable of obtaining the accurate temperature T of the temperature measurement contact 24 as the calibration temperature by amplifying the thermoelectromotive force (voltage) generated in the thin-film thermocouple element 20 and detected between the pair of input terminals 12 by a constant multiple with the previously evaluated and calculated gradient constant a by using Equation (1) and adding the temperature $T_0$ of the external contacts 25 and 26.

Here, the value of a in Equation (1) in a case where the thermoelectromotive force has a positive value is slightly different from the value of a in Equation (1) in a case where the thermoelectromotive force has a negative value. Accordingly, in order to obtain an accurate temperature, it is desirable to store Equation (1) in the storage means 15 in a form in which the value of a is also changed in accordance with the sign of the thermoelectromotive force.

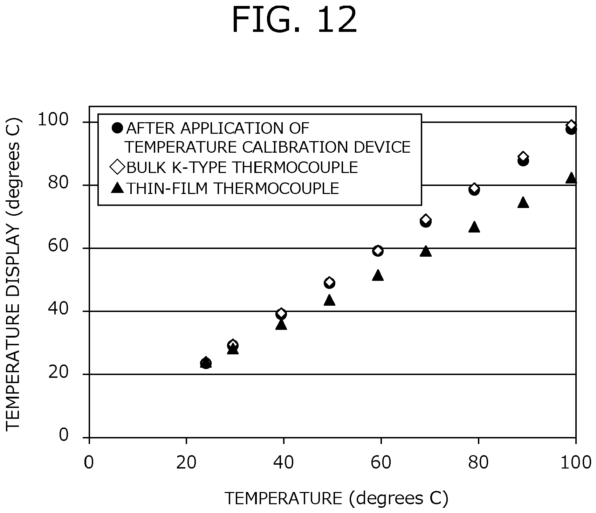

FIG. 12 illustrates the result of temperature measurement performed with the general temperature display device 30 and the thin-film thermocouple element 20 connected by means of the temperature calibration device 10 of the present invention.

As illustrated in FIG. 12, the display of the temperature display means 32 of the temperature display device 30 (after the application of the temperature calibration device) satisfactorily matched the temperature display in a case where the bulk thermocouple element 20' (bulk K-type thermocouple) was used.

REFERENCE SIGNS LIST

A:          Temperature measurement device
10, 10':    Temperature calibration device

| 11: | Connection portion |
|---|---|
| 11a: | Housing (lid side) |
| 11b: | Housing (main body side) |
| 11c: | Elastic body for crimping |
| 12: | Pair of input terminals |
| 12a, 12b: | Input terminal |
| 13: | Voltage input means |
| 14: | Computation means (CPU) |
| 15: | Storage means |
| 16: | Voltage application means |
| 17: | Output terminal |
| 17': | Wireless transmission means |
| 18: | Pair of conducting wires |
| 18a, 18b: | Conducting wire |
| 19: | Output connector |
| 20: | Thin-film thermocouple element |
| 21: | Substrate |
| 22, 23: | Electroconductive thin film |
| 24: | Temperature measurement contact |
| 25, 26: | External contact |
| 20': | Bulk thermocouple element |
| 22', 23': | Metal wire |
| 24': | Temperature measurement contact |
| 25', 26': | External contact |
| 30, 30': | Temperature display device |
| 31: | Connection means |
| 32: | Temperature display means |
| 33: | Temperature calculation means |
| 34: | Wireless reception means |

**Claims**

1. A temperature measurement device comprising:

a thin-film thermocouple element provided with at least one pair of thin films made of dissimilar metals, connected to each other at a temperature measurement contact on one end side, and having a pair of external contacts at the other end;
a temperature display device calculating a temperature by using an input voltage and displaying the calculated temperature; and
a temperature calibration device connected between the thin-film thermocouple element and the temperature display device, wherein
the temperature calibration device includes:

at least one pair of input terminals made of an electroconductive material and respectively connected to the pair of external contacts;
at least one pair of output terminals made of an electroconductive material and respectively connected to a pair of conducting wires linked to the temperature display device;
computation means for calibrating a detected value of a voltage between the at least one pair of input terminals and computing a calibrated voltage; and
voltage application means for outputting the calibrated voltage between the at least one pair of output terminals, and
the temperature display device calculates a calibration temperature by using the calibrated voltage input via the at least one pair of output terminals and the pair of conducting wires and displays the calculated calibration temperature.

2. The temperature measurement device according to claim 1, further comprising an output connector connected to the pair of conducting wires,

wherein the output connector is one in number.

3. A temperature calibration device connected to a thin-film thermocouple element provided with at least one pair of thin films made of dissimilar metals, connected to each other at a temperature measurement contact on one end side, and having a pair of external contacts at the other end, the temperature calibration device comprising:

at least one pair of input terminals made of an electroconductive material and respectively connectable to the pair of external contacts;
at least one pair of output terminals made of an electroconductive material and respectively connectable to the pair of conducting wires linked to a temperature display device calculating a temperature by using an input voltage and displaying the calculated temperature;
computation means for calibrating a detected value of a voltage between the at least one pair of input terminals and computing a calibrated voltage; and
voltage application means for outputting the calibrated voltage between the at least one pair of output terminals, wherein the calibrated voltage is output to the temperature display device when the at least one pair of input terminals are connected to the pair of external contacts of the thin-film thermocouple element and the at least one pair of output terminals are connected to the temperature display device.

4. The temperature calibration device according to claim 3, further comprising an output connector connected to the pair of conducting wires,
wherein the output connector is one in number.

5. The temperature calibration device according to claim 3 or 4,
wherein the computation means calculates the calibration temperature T by Equation (1) by using a preset temperature constant $T_0$ and a preset gradient constant a and calculates the calibrated voltage $V_1'$ by Equation (2) by using the calibration temperature T and a preset constant b when the detected value of the voltage between the pair of input terminals is $V_1$.

$$T = a \times V_1 + T_0 \quad (1)$$

$$V_1' = T/b \quad (2)$$

(Here, the parameter a is a value calculated by an approximate curve obtained from a relationship between a thermoelectromotive force generated in the thin-film thermocouple element and a temperature difference between the external contact and the temperature measurement contact in the thin-film thermocouple element, the parameter $T_0$ is a temperature at the external contact of the thin-film thermocouple element, and the parameter b is a constant calculated by an approximate curve obtained from a relationship between a thermoelectromotive force generated in a bulk thermocouple element and a temperature difference between an external contact and a temperature measurement contact in the bulk thermocouple element.)

6. The temperature calibration device according to any one of claims 3 to 5, comprising wireless transmission means for wirelessly transmitting the calibrated voltage to the temperature display device instead of the at least one pair of output terminals.

7. The temperature calibration device according to any one of claims 3 to 6, further comprising a connection portion detachably connecting the pair of external contacts to the at least one pair of input terminals.

# FIG. 1

# FIG. 2

# FIG. 3

# FIG. 4

# FIG. 5

```
┌─────────────────────────────────────────────────────────────┐
│  30                                                          │
│                                                              │
│  ┌──────────────┐   ┌──────────────┐   ┌──────────────┐      │
│  │  CONNECTION  │   │ TEMPERATURE  │   │ TEMPERATURE  │      │
│  │    MEANS     │───│ CALCULATION  │───│   DISPLAY    │      │
│  │              │   │    MEANS     │   │    MEANS     │      │
│  └──────────────┘   └──────────────┘   └──────────────┘      │
│         31                 33                 32             │
└─────────────────────────────────────────────────────────────┘
```

# FIG. 6

| | |
|---|---|
| PREPARATION STEP | ~S10 |

| | |
|---|---|
| TEMPERATURE MEASUREMENT STEP | ~S20 |

| | |
|---|---|
| EMPERATURE DISPLAY STEP | ~S30 |

# FIG. 7

START

ACQUIRE $V_1$ —— S1

COMPUTE T —— S2

CONVERT TO $V_1'$ —— S3

OUTPUT $V_1'$ —— S4

END

# FIG. 8

10´

```
STORAGE
MEANS          ~15
                            16´

INPUT      VOLTAGE      COMPUTATION    VOLTAGE
TERMINAL   INPUT        MEANS          APPLICATION
           MEANS                       MEANS
                                              17´
  12         13           14
                                       WIRELESS
                                       TRANSMISSION
                                       MEANS
```

# FIG. 9

# FIG. 10

# FIG. 11

# FIG. 12

## INTERNATIONAL SEARCH REPORT

| International application No. |
| --- |
| PCT/JP2019/016707 |

**A. CLASSIFICATION OF SUBJECT MATTER**
Int.Cl. G01K7/14(2006.01)i

According to International Patent Classification (IPC) or to both national classification and IPC

**B. FIELDS SEARCHED**

Minimum documentation searched (classification system followed by classification symbols)
Int.Cl. G01K7/02-7/14, G01K15/00, G01D18/00

Documentation searched other than minimum documentation to the extent that such documents are included in the fields searched
Published examined utility model applications of Japan      1922-1996
Published unexamined utility model applications of Japan    1971-2019
Registered utility model specifications of Japan            1996-2019
Published registered utility model applications of Japan    1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | JP 2010-96507 A (HIOKI E.E. CORPORATION) 30 April 2010, paragraphs [0022]-[0026], fig. 1 (Family: none) | 1-4, 6-7<br>5 |
| Y<br>A | JP 9-264768 A (MATSUSHITA ELECTRIC INDUSTRIAL CO., LTD.) 07 October 1997, claim 1, paragraphs [0003], [0011]-[0016], fig. 1-4 (Family: none) | 1-4, 6-7<br>5 |
| Y | JP 2007-139530 A (DAI NIPPON PRINTING CO., LTD.) 07 June 2007, fig. 1, 2 (Family: none) | 1-4, 6-7 |

☒ Further documents are listed in the continuation of Box C.          ☐ See patent family annex.

| | |
| --- | --- |
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 09.07.2019 | 23.07.2019 |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

**INTERNATIONAL SEARCH REPORT**

International application No.

PCT/JP2019/016707

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2010-151729 A (YOKOGAWA ELECTRIC CORPORATION) 08 July 2010, paragraphs [0024]-[0027] (Family: none) | 7 |
| A | JP 52-58554 A (MITSUBISHI HEAVY INDUSTRIES, LTD.) 14 May 1977 (Family: none) | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010190735 A